# EUROPÄISCHE PATENTSCHRIFT

(11) **EP 0 889 214 B1**
(45) Veröffentlichungstag und Bekanntmachung des Hinweises auf die Patenterteilung: **08.11.2000**
(21) Anmeldenummer: 98111378.0
(22) Anmeldetag: 20.06.1998
(51) Int. Cl.: F02D 13/04

(54) **System zur Erhöhung der Motorbremsleistung von Brennkraftmaschinen**
System to increase the brake power of engines
Système pour augmenter l'énergie de freinage de moteurs

(30) Priorität: 03.07.1997 DE 19728350
(43) Veröffentlichungstag der Anmeldung: 07.01.1999
(73) Patentinhaber: DaimlerChrysler AG, 70567 Stuttgart (DE)
(72) Erfinder: Bäuerle, Emil, 73732 Esslingen (DE)

(56) Entgegenhaltungen:
- DE-A- 3 900 739
- US-A- 3 234 923
- US-A- 5 146 890
- US-A- 5 404 851
- US-A- 5 809 964

## Beschreibung

Die Erfindung betrifft ein System zur Erhöhung der Motorbremsleistung von Brennkraftmaschinen, insbesondere Dieselmotoren.

Eine Vorrichtung zur Erhöhung der Motorbremsleistung ist schon bekannt, die eine Steuerung zum gezielten Öffnen und Schließen eines Einlaß- und eines Auslaßventils aufweist. Dabei wird bei einem erhöhten Bedarf von Motorbremsleistung während bestimmten Fahrsituationen eine Absperrklappe in einer Abgasleitung betätigt, wodurch der freie Querschnitt der Abgasleitung derart verkleinert bzw. ganz verschlossen werden kann, daß sich in der Abgasleitung ein Staudruck einstellt, gegen den bei geöffnetem Auslaßventil verdichtet wird. Eine Steuerungseinrichtung regelt das Öffnen und das Schließen des Ein- und des Auslaßventils derart, daß das Einlaßventil am oberen Totpunkt des Kolbens geöffnet wird und am unteren Totpunkt wieder verschlossen wird, wobei das Auslaßventil vor dem Erreichen des oberen Totpunktes geöffnet wird und am oberen Totpunkt wieder verschlossen wird.

Nachteilig ist dabei jedoch, daß die Abgasleitung zur Erhöhung bzw. zur Erzeugung einer Motorbremsleistung verengt bzw. ganz verschlossen werden muß. Somit wird ein in einem Abgassystem stromab der Absperrklappe angeordneter Abgasturbolader bzw. dessen Abgasturbine nicht mehr bzw. nur mit geringen Abgasmengen beaufschlagt. Damit ist der Abgasturbolader nicht mehr oder nur noch ungenügend in der Lage der Brennkraftmaschine verdichtete Ladeluft zuzuführen. Darüber hinaus wird das Abgassystem mit sehr hohen Drücken, welche aus der Verdichterleistung des Kolbens entstehen, beaufschlagt.

In der DE 195 16 971 A1 ist ein Verbrennungsmotor in Turbo-Compound-Ausführung mit Abgasbremse beschrieben. Dabei werden die Abgase des Verbrennungsmotores zum einen Teil in einen Abgasturbolader in dessen Turbinenteil eingeleitet und zum anderen Teil in eine Kraftturbine, welche die Strömungsenergie der Abgase über ein mechanisches Getriebe auf die Kurbelwelle des Verbrennungsmotores überträgt.

Hierbei ist jedoch von Nachteil, daß besonders im unteren Drehzahlbereich geringe Abgasmengen anfallen und somit nur eine geringe Kraftübertragung von der Kraftturbine auf die Kurbelwelle erfolgt. Darüber hinaus ist der Abgasturbolader im wesentlichen nur im mittleren und oberen Drehzahlbereich in der Lage den Verbrennungsmotor mit einem genügend hohen Ladedruck für die Entfaltung einer ausreichenden Motorbremsleistung zu beaufschlagen. Im unteren Drehzahlbereich des Verbrennungsmotores wird die Turbine des Abgasturboladers nur ungenügend mit Abgas beaufschlagt, womit der Verbrennungsmotor nur mit einem niedrigen, für die Entfaltung der Motorbremsleistung zu geringem Ladedruck vom Abgasturbolader beaufschlagt wird.

Aus der Praxis sind Brennkraftmaschinen bekannt, die ein in einem Zylinderkopf angeordnetes Auslaßventil bzw. Dekompressionsventil aufweisen. Die Wirkungsweise des Dekompressionsventiles ist die, daß während dem Motorbremsbetrieb der Bremskraftmaschine, unabhängig von einer Drehzahl und einer Abgastemperatur der Brennkraftmaschine, das Dekompressionsventil bei einer Stellung des Kolbens im Bereich seines oberen Totpunktes geöffnet wird, um den komprimierten Brennrauminhalt in ein Abgassystem auszuschieben.

Nachteilig ist jedoch dabei, daß der Einsatz eines Dekompressionsventiles zur Erhöhung des Motorbremsbetriebes über den gesamten Betriebsbereich der Brennkraftmaschinen zur Überschreitung einer zulässigen Temperatur der Abgase und somit zu einer unerwünschten thermischen Belastung der Brennkraftmaschine führen kann.

In der DE 39 00 739 A1 ist ein Verfahren zur Steigerung der Motorbremsleistung bei Viertakt-Hubkolben-Brennkraftmaschinen beschrieben. Dabei wird im Bremsbetrieb im ersten und dritten Takt Luft über das Einlaßventil angesaugt und im zweiten und vierten Takt die Luft verdichtet. Durch das teilweise geöffnete Auslaßventil wird diese verdichtete Luft gegen eine in der Abgasleitung vorliegende Drosselklappe ausgeschoben. Um den Kompressionsenddruck zu erhöhen, d.h. die für die Verdichtung aufzubringende Arbeit größer zu machen, wird jeweils am Anfang und am Ende des Verdichtungstaktes ein kurzzeitiges Öffnen des Auslaßventils vorgeschlagen.

Der vorliegenden Erfindung liegt die Aufgabe zugrunde, ein System zu schaffen, durch welches einem Benutzer eines Kraftfahrzeuges in allen Betriebsbereichen einer Brennkraftmaschine eine genügend große Motorbremsleistung zur Verfügung steht, wobei jedoch eine zu hohe thermische Belastung der Brennkraftmaschine vermieden werden soll.

Erfindungsgemäß wird diese Aufgabe durch die im Anspruch 1 genannten Merkmale gelöst.

Durch die erfindungsgemäße Kombination von aus dem Stand der Technik bekannter Maßnahmen wie Turbobrake und Abgasturbolader mit variabler Turbinengeometrie, welche zur Erhöhung der Motorbremsleistung im mittleren und oberen Drehzahlbereich geeignet sind, und der zusätzlichen Aufladung der Brennkraftmaschine im unteren Drehzahlbereich mittels dem Auslaßventil ist gewährleistet, daß einem Benutzer eines Kraftfahrzeuges über dem gesamten Drehzahlbereich der Brennkraftmaschine eine ausreichende Motorbremsleistung zur Verfügung steht. Darüber hinaus können mit dieser Kombination thermische Überlastungen der Brennkraftmaschine vermieden werden.

Durch das erfindungsgemäße Öffnen des Auslaßventils zu Beginn eines Verdichtungstaktes bzw. Verdichtungshubes strömt Abgas aus dem Abgassystem in den Brennraum ein, da zu diesem Zeitpunkt der Druck im Abgassystem höher ist. Dadurch wird der Druck in dem Brennraum am Beginn des Verdichtungstaktes derart erhöht, daß die nach dem Schließen des Auslaßventils erfolgende Verdichtung einen erhöhten Arbeitsaufwand erfordert. Das bedeutet, daß sich durch den somit vergrößerten Gegendruck, der bei dem Verdichten des Brennraumvolumens überwunden werden muß, als Ergebnis eine höhere Motorbremsleistung ergibt.

Um diesen Effekt beim Erreichen des oberen Kolbentotpunktes beim anschließenden Expansionshub nicht wieder zu verlieren, wird das Auslaßventil am Ende des Verdichtungstaktes bzw. wenn der Kolben seinen oberen Totpunkt erreicht, wieder geöffnet und der verdichtete Brennraumvolumeninhalt in das Abgassystem ausgeschoben.

Die Aufladung bzw. Druckerhöhung im Brennraum durch die Abgasrückführung aus dem Abgassystem kann zu einer Temperaturerhöhung im Brennraum und in dem Abgassystem führen.

Um unzulässige Temperaturbelastungen zu vermeiden, ist das Auslaßventil erfindungsgemäß über eine Steuerleitung mit einer Steuereinrichtung verbunden. Die in der Steuereinrichtung vorgesehene Drehzahlmeßeinrichtung und ein Temperaturmeßfühler ermitteln permanent Meßwerte bezüglich der Abgastemperatur und der Drehzahl der Brennkraftmaschine. Die Meßwerte werden in einem Steuergerät der Steuereinrichtung in erfindungsgemäßer Weise derart verarbeitet, daß ein Öffnungszeitpunkt und eine Öffnungsdauer des Auslaßventils durch die Steuereinrichtung in vorteilhafter Weise stufenlos gesteuert werden.

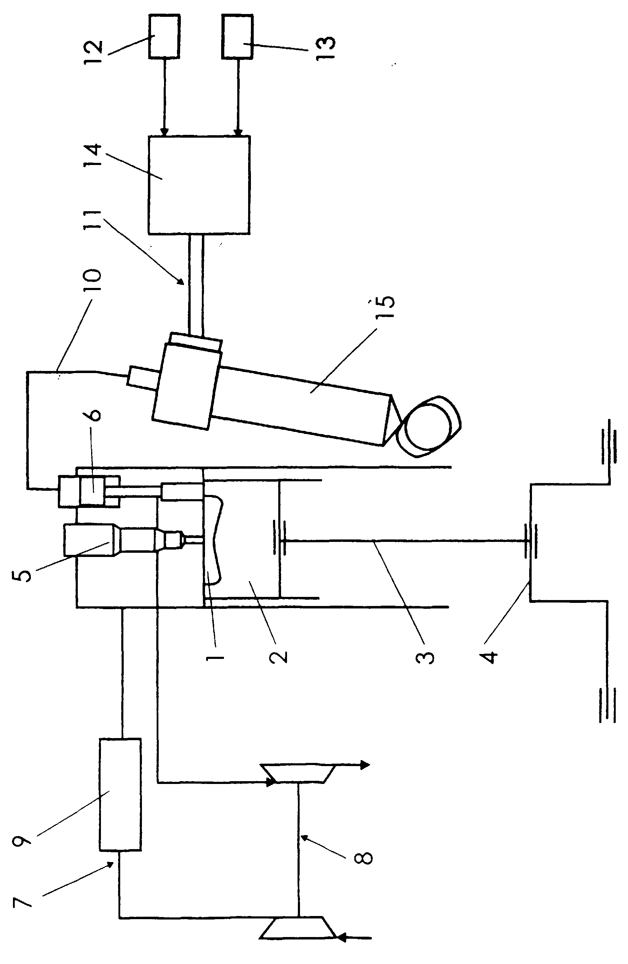

Vorteilhafte Ausgestaltungen und Weiterbildungen der Erfindung ergeben sich aus den Unteransprüchen und aus dem nachfolgend anhand der Zeichnung prinzipmäßig beschriebenen Ausführungsbeispiel.

Die einzige Zeichnung zeigt eine schematische Darstellung der erfindungsgemäßen Vorrichtung zur Erhöhung der Motorbremsleistung. In einem Brennraum 1 einer nicht näher dargestellten Brennkraftmaschine ist ein Kolben 2 angeordnet, welcher über eine Pleuelstange 3 mit einer Kurbelwelle 4 verbunden ist. An der der Kurbelwelle 4 abgewandten Seite des Brennraumes 1 ist ein Einspritzventil 5 sowie ein Auslaßventil 6 angeordnet. Das Auslaßventil 6 ist mit einem Abgassystem 7 verbunden, welches einen aus dem Stand der Technik bekannten Abgasturbolader 8 mit variabler Turbinengeometrie und einen Ladeluftkühler 9 aufweist.

Während des Motorbremsbetriebes wird das Auslaßventil 6 zu einem Zeitpunkt geöffnet, bei dem sich der Kolben 2 520° bis 620° vor dessem oberen Totpunkt, bei welchem eine Zündung eines Luft-Kraftstoff-Gemisches in dem Brennraum 1 erfolgt, befindet. Zu diesem Zeitpunkt ist der Druck in dem Brennraum 1 kleiner als der Druck des Abgases im Abgassystem 7. Dies hat zur Folge, daß bei geöffnetem Auslaßventil 6 das Abgas aus dem Abgassystem 7 in den Brennraum 1 einströmt und der Druck in dem Brennraum 1 angehoben wird. Nach dieser Druckerhöhung wird das Auslaßventil 6 wieder geschlossen während sich der Kolben 2 aus seinem unteren Totpunkt in Richtung des oberen Totpunktes bewegt. Durch die Druckerhöhung wird eine höhere Verdichterleistung zum Verdichten des Brennraumvolumens notwendig, wobei die erhöhte Verdichterleistung äquivalent zu der gewonnenen Motorbremsleistung der Brennkraftmaschine ist.

Befindet sich der Kolben 2 am Ende des Verdichtungshubes im seinem oberen Totpunkt, wird das Auslaßventil 6 wieder geöffnet und das verdichtete Brennraumvolumen bzw. Abgas-Luft-Gemisch wird durch das Auslaßventil 6 in das Abgassystem 7 ausgeblasen. Nach dem Ausblasen wird das Auslaßventil 6 wieder geschlossen und der Kolben 2 bewegt sich wieder in Richtung des unteren Totpunktes.

Damit ist gewährleistet, daß die beim Verdichtungshub aufgewendete Verdichtungsleistung bei der Abwärtsbewegung des Kolbens 2 durch eine Expansion des Brennraumvolumens nicht wieder an die Kurbelwelle 2 zurückgegeben wird.

Die Aufladung bzw. Druckerhöhung im Brennraum 1 durch die Abgasrückführung aus dem Abgassystem 7 kann zu einer Temperaturerhöhung im Brennraum 1 und in dem Abgassystem 7 führen.

Damit unzulässige Temperaturbelastungen vermieden werden können, ist das Auslaßventil 6 über eine Steuerleitung 10 mit einer Steuereinrichtung 11 verbunden. Die in der Steuereinrichtung 11 vorgesehene Drehzahlmeßeinrichtung 12 und ein Temperaturmeßfühler 13 ermitteln permanent Meßwerte bezüglich der Abgastemperatur und der Drehzahl der Brennkraftmaschine.

Die Meßwerte werden in einem Steuergerät 14 der Steuereinrichtung 11 derart verarbeitet, daß ein Öffnungszeitpunkt und eine Öffnungsdauer des Auslaßventils 6 mittels einer in der Steuereinrichtung 11 vorgesehenen Steckpumpe 15 stufenlos gesteuert werden.

Steigt die Abgastemperatur über einen zulässigen Wert, wird die zusätzliche Aufladung aus dem Abgassystem 7 über das Auslaßventil 6 verringert bzw. ganz abgesteuert. Somit ist gewährleistet, daß die Druckerhöhung vorwiegend in Betriebsbereichen mit geringen Temperaturbelastungen, wie beispielsweise in unteren Drehzahlbereichen, der Brennkraftmaschine durchgeführt wird.

## Patentansprüche

1. System zur Erhöhung der Motorbremsleistung von Brennkraftmaschinen, insbesondere Dieselmotoren, mit wenigstens einem Brennraum und einem in dem Brennraum angeordneten Kolben, und wenigstens einem Auslaßventil, über das Abgase aus dem Brennraum in ein Abgassystem geleitet werden, wobei ein im Abgassystem (7) vorgesehener Abgasturbolader (8) mit einer variablen Turbinengeometrie zur Erzeugung einer Motorbremsleistung im mittleren und oberen Drehzahlbereich dient, wobei zusätzlich im unteren Drehzahlbereich eine Aufladung aus dem Abgassystem (7) derart erfolgt, daß das Auslaßventil (6), welches mit einer Steuereinrichtung (11) über eine Steuerleitung (10) verbunden und damit steuerbar ist, in einer Stellung des Kolbens (2) von 520° bis 620° vor einer Zündung im oberen Totpunkt des Kolbens (2) geöffnet wird, wobei bei geöffneter Stellung des Auslaßventiles (6) der Brennraum (1) mit dem Abgassystem (7) derart verbunden ist, daß das Abgas durch das Auslaßventil (6) von dem Brennraum (1) in das Abgassystem (7) oder aus dem Abgassystem (7) heraus in den Brennraum (1) gelangen kann, wobei nach Schließen des Auslaßventiles (6) mit dem aus dem Abgassystem (7) in den Brennraum (1) eingebrachten Abgas das Volumen des Brennraumes (1) mittels des Kolbens (2) verdichtet wird, wobei das Auslaßventil (6) am Ende des Verdichtungshubes geöffnet und das Abgas aus dem Brennraum (1) durch das Auslaßventil (6) in das Abgassystem ausgeblasen wird, wobei in Abhängigkeit von einer Abgastemperatur und der Drehzahl der Brennkraftmaschine Öffnungszeitpunkt und Öffnungsdauer des Auslaßventiles (6) stufenlos gesteuert wird.

2. System nach Anspruch 1,
die Steuereinrichtung (11) ein Steuergerät (14) und eine Steckpumpe (15) aufweist.

3. System nach Anspruch 1 oder 2,
**dadurch gekennzeichnet,** daß zur Erzeugung der Motorbremsleistung ein Dekompressionsventil vorgesehen ist.

## Claims

1. System for increasing the engine braking performance of combustion engines, in particular diesel engines, with at least one combustion chamber and a piston arranged in the combustion chamber, and at least one outlet valve through which exhaust gas passes out of the combustion chamber and into an exhaust gas system, such that in the exhaust gas system (7) an exhaust gas turbo-charger (8) with variable turbine geometry is provided in order to produce an engine braking effect in the medium and high engine speed range, and additionally, in the low engine speed range, a pressure boost from the exhaust system (7) takes place such that the outlet valve (6), which is connected via a control line (10) to a control device (11) and can be controlled thereby, is opened when the piston (2) is in a position from 520° to 620° before ignition takes place at the top-dead-centre position of the piston (2), and when the outlet valve (6) is open the combustion chamber (1) is connected to the exhaust system (7) in such a way that the exhaust gas can flow from the combustion chamber (1) into the exhaust system (7) or from the exhaust system (7) back into the combustion chamber (1), and once the outlet valve (6) has been closed with some exhaust gas from the exhaust system (7) present in the combustion chamber (1), the volume of the combustion chamber (1) is compressed by the piston (2), such that at the end of the compression stroke the outlet valve (6) opens and exhaust is expelled out of the combustion chamber (1) through the outlet valve (6) into the exhaust system, and the opening instant and opening duration of the outlet valve (6) are continuously regulated as a function of the exhaust gas temperature and the engine speed of the combustion engine.

2. System according to Claim 1, comprising the control device (11), a control unit (14) and a pressure pump (15).

3. System according to Claims 1 or 2,
**characterised in that**
to produce the engine braking effect a decompression valve is provided.

## Revendications

1. Système pour augmenter la puissance en frein moteur de moteurs à combustion interne, en particulier de moteurs diesel, avec au moins une chambre de combustion et un piston disposé dans la chambre de combustion, et au moins une soupape d'échappement, par l'intermédiaire de laquelle des gaz d'échappement issus de la chambre de combustion sont dirigés dans un système de gaz d'échappement, un turbocompresseur entraîné par les gaz d'échappement (8), prévu dans le système de gaz d'échappement (7), ayant une géométrie de turbine variable, servant à générer une puissance de frein moteur dans la plage de vitesses de rotation moyenne et supérieure, en plus, dans la plage de vitesses de rotation inférieure, une suralimentation s'effectuant à partir du système de gaz d'échappement (7), de manière que la soupape d'échappement (6), qui est reliée à un dispositif de commande (11) par l'intermédiaire d'une conduite de commande (10), et est ainsi susceptible d'être commandée, soit ouverte dans une position du piston (2) de 520° à 620° avant un allumage au point mort supérieur du piston (2), la chambre de combustion (1) étant reliée au système de gaz d'échappement (7) lorsque la soupape d'échappement (6) est en position ouverte, de manière que les gaz d'échappement puissent arriver en passant par la soupape d'échappement (6), de la chambre de combustion (1) au système de gaz d'échappement (7) ou du système de gaz d'échappement (7) à la chambre de combustion (1), où, après fermeture de la soupape d'échappement (6), avec les gaz d'échappement venant du système de gaz d'échappement (7) et introduits dans la chambre de combustion (1), le volume de la chambre de combustion (1) est comprimé au moyen du piston (2), la soupape d'échappement (6) étant ouverte à la fin de la course de compression et les gaz d'échappement issus de la chambre de combustion (7) étant expulsés dans le système de gaz d'échappement, en passant par la soupape d'échappement (6), le moment de l'ouverture et la durée d'ouverture de la soupape d'échappement (6) étant commandés de façon progressive continue, en fonction de la température des gaz d'échappement et de la vitesse de rotation du moteur à combustion interne.

2. Système selon la revendication 1, caractérisé en ce que le dispositif de commande (11) présente un appareil de commande (14) et une pompe volumétrique (15).

3. Système selon la revendication 1 ou 2, caractérisé en ce qu'une soupape de décompression est prévue pour générer la puissance de frein moteur.
